# EUROPEAN PATENT SPECIFICATION

(11) **EP 3 392 411 B1**
(45) Date of publication and mention of the grant of the patent: **19.02.2020**
(21) Application number: 18167318.7
(22) Date of filing: 13.04.2018
(51) Int. Cl.: E01H 11/00, G06K 9/00

(54) **METHOD FOR THE AUTOMATIC DETECTION AND SUBSEQUENT PROCESSING AND STORAGE OF ONE OR MORE GEO-REFERENCED ENVIRONMENTAL PARAMETERS REFERRING TO A RAILWAY OF REFERENCE**
VERFAHREN ZUM AUTOMATISCHEN NACHWEIS UND ZUR NACHFOLGENDEN BEARBEITUNG UND SPEICHERUNG VON EINEM ODER MEHR UMWELTPARAMETERN, BEZUEGLICH EINES REFERENZBAHNS
PROCÉDÉ DE DÉTECTION AUTOMATIQUE ET DE TRAITEMENT ULTÉRIEUR ET DE STOCKAGE D'UN OU PLUSIEURS PARAMÈTRES ENVIRONNEMENTAUX ET SE REFERANT À UN CHEMIN DE FER DE RÉFÉRENCE

(30) Priority: 19.04.2017 IT 201700039405
(43) Date of publication of application: 24.10.2018
(73) Proprietor: Geosintesi S.P.A., 00187 Rome (IT)
(72) Inventor: D'ANGELI, FRANCO, 10145 Torino (IT); PASINI, SAURO, 56122 Pisa (IT); TOVAGLIERI, ANDREA, 21010 Golasecca (VA) (IT)
(74) Representative: De Tullio, Michele Elio

(56) References cited:
- EP-A1- 3 176 052
- WO-A1-99/17606
- WO-A1-2006/117581
- US-A1- 2013 230 212

## Description

The present invention refers to a method for the automatic detection and subsequent processing and storage of one or more geo-referenced environmental parameters referring to a railway of reference. More specifically, the present invention refers to a method, as indicated, that allows the automatic detection, the visual sample check and the subsequent processing of one or more parameters referring to the vegetation present along the railway of reference, the track bed and the relative sides, as well as the infrastructural components that are part of the same railway.

In the present state of the art, different systems and methods are known that allow to detect one or more parameters referring to a specific environment of reference, as a railway route.

The literature patent document n. WO2004005625 discloses a system comprising a weeding machine installed on board of a railway vehicle that is equipped with a camera to recognize potentially infesting plants along the railway route, a PC for the recognition of infesting plants, and a meteorological unit, which are operative connected to a control PC.

Similarly, the literature patent document n. DE3935719 discloses a vehicle equipped with sensors for detecting and controlling infesting plants present along a railway route, or video cameras for scanning the same railway and a processor to convert the signals detected into a corresponding indicative measure of the green coverage present along the railway monitored. If the green coverage (or weed) exceeds a preset value, the surface is accordingly treated with herbicides, which are suitably applied using controlled spray heads.

US Patent Application published as US 2013/230212A1 discloses a method of surveying a section of a railway to determine amounts of soil to be excavated or added at selected position coordinates of track locations to achieve the desired profile of a ditch along at least one side of the railway. By the method therein disclosed, the proper adjusted profile of the ditch prevents water to accumulate in the centre of the railway, avoiding erosion problems and the like.

International Patent Application published as WO 06/117581 discloses a method for constructing a weed map provided with a light source of its own, thus allowing to detect the weed map also under particular low visibility conditions and/or at any time independently of the time of the day.

Further examples of systems and methods for detecting one or more parameters referring to a specific area of reference, in particular a railway route, are disclosed in the following literature patent documents: WO02079579, CN101485302, DE3935719, KR20150054586, KR20130125026, KR20090066469 and FR2695422. However, it is noted that said known systems and methods are often incomplete and, in some cases, hardly reliable, not allowing to perform sufficiently detailed measurements and, consequently, the subsequent processing of accurate and reliable models and planning of prompt and targeted operations, defined on the basis of the characteristics and peculiarities of individual situations. Therefore, the effectiveness of potential maintenance or prevention operations may be considerably compromised.

Said known methods and systems also fail to allow the storage of the information collected in an IT system for the geo-reference management of the landscape.

In the technical field of reference, it is therefore perceived, the need of a method that allows the operator to perform the automatic detection of one or more parameters referring to a railway of reference in a easily and safely way, and the subsequent processing and storage of the same, with a high level of precision and reliability, so as to obtain precise and detailed information that can then be used to plan adequate intervention, maintenance, and prevention strategies. In the light of the aforementioned considerations, the purpose of this invention is to provide a method for the automatic detection and subsequent processing and storage of one or more geo-referenced environmental parameters referring to a railway of reference, which allows to perform the automatic detection of one or more parameters referring to the railway of reference and the subsequent processing of the same with a high level of precision and reliability, for obtaining precise and detailed information, so as to enable the operators to both implement maintenance and prevention operations with a high level of effectiveness, and to have a quantitative feedback on the effectiveness of the performed operations. As a solution, this invention provides a method for the automatic detection and subsequent processing and storage of one or more geo-referenced environmental parameters referring to a railway of reference, comprising the steps of claim 1.

Further advantageous characteristics of the aforementioned method are described in the following dependent claims.

Said claims are integrally cited below.

Here below is the description of an exampling, and not limiting, embodiment, of the method for the automatic detection and subsequent processing and storage of one or more geo-referenced environmental parameters referring to a railway of reference, according to the present invention.

More specifically, said method comprises the following steps, consisting of:
- automatically acquiring one or more geo-referenced environmental parameters referring to one or more current environmental conditions of a railway of reference by means of detecting means that are located on board of a mean that is suitable for movement on a rail;
- transmitting said data and said one or more detected parameters to a remote server, implemented with memory means that are configured for the organized storage of said geo-referenced parameters;
- processing, by means of dedicated software means that reside in said remote server, and according to predefined instructions, said one or more geo-referenced environmental parameters, for generating one or more 3D models referring to the current environmental conditions of the railway of reference;
- processing, by means of said dedicated software means, a confrontation between said one or more 3D models and one or more corresponding model of reference, for detecting possible deviations or anomaly situations.

The transmission of said one or more detected parameters to said remote server occurs by means of a wireless connection, as known in the state of the art technology.

Said vehicle suitable for moving on rails can be, for example, a passenger or freight train or specifically dedicated train.

The aforementioned step of automatically acquiring said one or more geo-referenced environmental parameters referring to corresponding current environmental conditions of the railway of reference can be conveniently implemented by means of laser and /or photographic type scanning means.

Said laser and/or photographic type scanners are known in the state of the art technology and, as such, are therefore not subject to further description herein.

In the present embodiment of the invention, said processing step that matches said one or more 3D models corresponding to the acquisition of data over subsequent periods of time, by means of dedicated software means, is performed by means of overlapping the current profile of said one or more models at the current time and the profile corresponding to the detection at the time of reference.

Conveniently, according to the present embodiment, the method includes the following additional steps, consisting of:
- defining the profile of said one or more 3D models referring to the current environmental conditions of the railway of reference by means of a plurality of points;
- performing, by means of said dedicated software means, a reflectance data analysis for each of said points defining the profile of the 3D model that is subject of examination, in order to detect information.

The gap between the current profile and the profile of reference identifies the presence of an unexpected entity, potentially represented, for example, by the presence of vegetation, is defined by the points outside of the profile.

In relation to the aforementioned example, in which are identified the points of probable presence of vegetation, it is also possible to perform another test, based on the reflectance analysis measured with reference to the same points, using a laser system. The presence of reflectance values characteristic of vegetation confirms the previous data detected and its attribution.

By means of said test, based on the reflectance of each of the said points, it is therefore possible to obtain the optimal definition and identification of an object detected (for example, distinguish a new bush present on the railway route rather than a bench or similar object, previously installed in the same position).

For a further definition of the environmental characteristics of the railway of reference, according to the present embodiment of the invention, said automatic detection means can also be implemented with camera means, in order to:
- acquire a sequence of geo-referenced images related to the railway of reference, at predetermined time intervals;
- process, by means of said dedicated software means, said acquired geo-referenced images in order to confirm, by means of visual confrontation, the presence and the cause of gap situations or anomalies detected by the analysis of data detected using the laser system.

In particular, the photographic detection allows to achieve a better definition of the environmental conditions of the railway route to test, as well as the objects present on the same.

Said camera means are known in the present state of the art technology and therefore are not further disclosed herein.

Furthermore, according to the present invention, said remote server may be operatively connected to a database, duly configured for the organized storage of historical data of said one or more geo-referenced environmental parameters, detected with reference to a predefined time span.

In this case, it is possible to process, by means of said dedicated software means, one or more confrontation operations, between one or more current parameters and one or more corresponding historical parameters, stored in said database, for the identification of possible deviation or anomaly situations.

Said database can be conveniently consulted, as known, by means of a query or other search system, using a user interface accessible by means of a fixed or mobile electronic device.

As disclosed above, this automatic acquisition step of said one or more geo-referenced environmental parameters referring to said railway route of reference may conveniently include detecting one or more parameters referring to the current state of the vegetation that is present within and in the nearby of the railway.

Said one or more parameters concern aspects of a qualitative and quantitative nature referring to the vegetation within the context of the railway route of reference, for subsequent classification of the vegetation as:
- infesting;
- dangerous;
- neutral;
- useful.

Basing on the information obtained as the result of the processing steps specified above, the system is capable of identifying and consequently providing, in a controlled and automatic way, the best intervention strategies that are subsequently transmitted to the operators.

As an example, it is possible to define an optimised removal strategy of the vegetation deemed to be dangerous or infesting, minimizing the use of herbicides or pesticides, respectively defining a strategy of adequate promotion of useful vegetation, with the relative consequences in terms of advantages for the biodiversity and enhancement of the landscape.

More specifically, it is evident how the present method makes it possible to process and implement intervention strategies that allow:
- reducing of the environmental impact of the herbicides;
- safeguarding the biodiversity and useful or neutral flora;
- preventing or at least reducing of the risk of fallen trees and their parts on the railway;
- increasing of operator and passenger safety; and
- improving of the qualitative characteristics of the landscape perceived.

Alternatively, this automatic acquisition step of said one or more geo-referenced environmental parameters referring to said railway route of reference may comprise detection of one or more parameters referring to the current state of the railway ballast and relative sides.

More particularly, the possibility of making a confrontation between one or more current parameters and one or more corresponding historical parameters, according to the above specifications, allows the promptly identification and definition of potential variations or symptoms of potential anomalies.

In this way, it is possible to identify, plan, and carry out timely and targeted maintenance and prevention interventions, defined according to the characteristics of each individual case and, in particular:
- foresee and prevent settling, mudslides, erosion damage, and
- provide, in a timely and punctual manner, consolidation operation.

According to a different embodiment, said automatic acquisition step of said one or more one or more geo-referenced environmental parameters referring to said railway route of reference may also comprise detecting one or more parameters referring to the current state of the infrastructural components of the same railway route.

In this way, it is possible to intercept, define and communicate the anomaly situations in a timely and specific way and consequently plan the best intervention strategy.

As is evident in the light of the considerations made herein, said method for the automatic detection and the subsequent processing and storage of one or more geo-referenced environmental parameters referring to a railway of reference, according to the present invention, makes it possible carry out the automatic detection of one or more parameters referring to the railway of reference, as well as the subsequent processing of the same, with a high level of precision and reliability, in order to obtain precise and punctual information, so as to enable operators to actuate highly effective maintenance and prevention interventions.

As disclosed above, this invention allows to achieve the purposes described in the introduction in a simple and advantageous way.

## Claims

1. Method for the automatic detection and subsequent processing and storage of one or more geo-referenced environmental parameters referring to a railway of reference, including the following steps consisting in:
- automatically acquiring one or more geo-referenced environmental parameters referring to one or more current environmental conditions of a railway of reference by means of detecting means that are located on board of a mean that is suitable for the movement on a rail;
- transmitting said data and said one or more detected parameters to a server, implemented with memory means that are configured for the organized storage of said geo-referenced parameters;
- processing, by means of dedicated software means that reside in said remote server, and according to predefined instructions, said one or more geo-referenced environmental parameters, for generating one or more 3D models referring to the current environmental conditions of the railway of reference;
- processing, by means of said dedicated software means, a confrontation between said one or more 3D models and one or more corresponding model of reference, for detecting possible deviation or anomaly situations, **characterised in that** said server is remote and **in that** said step of automatically acquiring said one or more geo-referenced environmental parameters referring to said railway of reference comprises the steps of:
- detecting one or more parameters referring to the current state of the vegetation that is present within and in the nearby of the railway;
- classifying said vegetation as infesting, dangerous, neutral, useful, and.
- basing on said classification, identifying and consequently providing, in a controlled and automatic way, the best intervention strategies that are subsequently transmitted to the operators.

2. Method according to claim 1, wherein said step of processing, by means of said dedicated software means, a confrontation between said one or more 3D models and one or more corresponding models of reference, is performed by means of confrontation by overlapping the current profile of said one or more models and the profile of a corresponding predefined model of reference.

3. Method according to claim 1 and/or 2, wherein said step of automatically acquiring said one or more geo-referenced environmental parameters referring to corresponding current environmental conditions of the railway of reference is implemented by means of laser-type scan means.

4. Method according to one or more of the preceding claims, comprising the further steps of:
- defining the profile of said one or more 3D models referring to the current environmental conditions of the railway of reference by means of a plurality of points;
- performing, by means of said dedicated software means, a reflectance data analysis for each of said points defining the profile of the 3D model that is subject of examination, in order to detect information referring to the environment conditions of the monitored railway.

5. Method according to one or more of the preceding claims, wherein said automatic detection means are further implemented with camera means, comprising the steps of:
- acquiring a sequence of geo-referenced images related to the railway of reference, at predetermined time intervals;
- processing, by means of said dedicated software means, said acquired geo-referenced images, in order to support the individuation of possible deviation or anomaly situations.

6. Method according to one or more of the claims 1 to 5, wherein said step of automatically acquiring one or more geo-referenced environmental parameters referring to said railway of reference comprises detecting one or more parameters referring to the current state of the railway ballast and relative sides.

7. Method according to one or more of the claims 1 to 5, wherein said step of automatically acquiring one or more geo-referenced environmental parameters referring to said railway of reference comprises detecting one or more parameters referring to the current state of the infrastructural components included in the same railway.

8. Method according to one or more of the preceding claims, wherein said remote server is implemented with a database, which is configured for the organised storage of historical data of the geo-referenced environmental parameters detected with reference to a predefined time span.

9. Method according to claim 8, comprising the further step of processing, by means of said dedicated software means, one or more confrontation operations, between one or more current parameters and one or more corresponding historical parameters, stored in said database, for the identification of possible deviation or anomaly situations.

## Patentansprüche

1. Verfahren zum automatischen Detektieren und anschließenden Verarbeiten und Speichern von einem oder mehreren georeferenzierten Umgebungsparametern, die sich auf einen Referenzschienenweg beziehen, das die folgenden Schritte umfasst, darin bestehend:
- automatisches Erfassen von einem oder mehreren georeferenzierten Umgebungsparametern, die sich auf eine oder mehrere aktuelle Umgebungsbedingungen eines Referenzschienenwegs beziehen, mithilfe einer Detektionseinrichtung, die sich an Bord eines Mittels befindet, das zur Bewegung auf einem Gleis geeignet ist;
- Übertragen dieser Daten und des einen oder der mehreren detektierten Parameter an einen Server, der mit Speichermitteln implementiert ist, die zum organisierten Speichern der georeferenzierten Parameter eingerichtet ist;
- Verarbeiten mithilfe speziell dafür vorgesehener Softwaremittel, die auf dem Fernserver residieren, und gemäß vorgegebenen Anweisungen des einen oder der mehreren georeferenzierten Umgebungsparameter, um eines oder mehrere 3D-Modelle zu generieren, die sich auf die aktuellen Umgebungsbedingungen des Referenzschienenwegs beziehen;
- Abarbeiten, mithilfe der speziell dafür vorgesehenen Softwaremittel, einer Gegenüberstellung zwischen dem einen oder den mehreren 3D-Modellen und einem oder mehreren entsprechenden Referenzmodellen, um mögliche Abweichungs- oder Anomaliesituationen zu erkennen, **dadurch gekennzeichnet dass** der Server fern ist und dass der Schritt des automatischen Erfassens von einem oder mehreren georeferenzierten Umgebungsparametern, die sich auf den Referenzschienenweg beziehen, die folgenden Schritte umfasst:
- Detektieren von einem oder mehreren Parametern, die sich auf den aktuellen Zustand der Vegetation beziehen, die sich auf oder nahe dem Schienenweg befindet;
- Einstufen der Vegetation als wuchernd, gefährlich, neutral, nützlich, und
- basierend auf dieser Einstufung Identifizieren und dementsprechend auf gesteuerte und automatische Weise Bestimmen der besten Eingriffsstrategien, die anschließend an das Betriebspersonal übermittelt werden.

2. Verfahren nach Anspruch 1, wobei der Schritt des Abarbeitens, mithilfe der speziell dafür vorgesehenen Softwaremittel, einer Gegenüberstellung zwischen dem einen oder den mehreren 3D-Modellen und einem oder mehreren entsprechenden Referenzmodellen mittels einer Gegenüberstellung durch Überlagerung des aktuellen Profils des einen oder der mehreren Modelle und des Profils eines entsprechenden vorgegebenen Referenzmodells durchgeführt wird.

3. Verfahren nach Anspruch 1 und/oder 2, wobei der Schritt des automatischen Erfassens des einen oder der mehreren georeferenzierten Umgebungsparameter, die sich auf entsprechende aktuelle Umgebungsbedingungen des Referenzschienenwegs beziehen, mithilfe von laserartigen Abtastmitteln implementiert wird.

4. Verfahren nach einem oder mehreren der vorherigen Ansprüche, das die folgenden weiteren Schritte umfasst:
- Definieren des Profils des einen oder der mehreren 3D-Modelle, die sich auf die aktuellen Umgebungsbedingungen des Referenzschienenwegs beziehen, mithilfe einer Vielzahl von Punkten;
- Durchführen, mithilfe der speziell dafür vorgesehenen Softwaremittel, einer Reflexionsdatenanalyse für jeden der Punkte, die das Profil des 3D-Modells definieren, das Gegenstand der Prüfung ist, um Informationen zu detektieren, die sich auf die Umgebungsbedingungen des überwachten Schienenwegs beziehen.

5. Verfahren nach einem oder mehreren der vorherigen Ansprüche, wobei die automatische Detektionseinrichtung ferner mit Kameramitteln implementiert wird, umfassend die folgenden Schritte:
- Erfassen einer Sequenz von georeferenzierten Bildern in Bezug auf den Referenzschienenweg in vorgegebenen Zeitabständen;
- Verarbeiten, mithilfe der speziell dafür vorgesehenen Softwaremittel, der erfassten georeferenzierten Bilder, um die Individuation möglicher Abweichungs- oder Anomaliesituationen zu unterstützen.

6. Verfahren nach einem oder mehreren der Ansprüche 1 bis 5, wobei der Schritt des automatischen Erfassens von einem oder mehreren georeferenzierten Umgebungsparametern, die sich auf den Referenzschienenweg beziehen, das Detektieren von einem oder mehreren Parametern umfasst, die sich auf den aktuellen Zustand der Bettung des Schienenwegs und der zugehörigen Seiten bezieht.

7. Verfahren nach einem oder mehreren der Ansprüche 1 bis 5, wobei der Schritt des automatischen Erfassens von einem oder mehreren georeferenzierten Umgebungsparametern, die sich auf den Referenzschienenweg beziehen, das Detektieren von einem oder mehreren Parametern umfasst, die sich auf den aktuellen Zustand der Infrastrukturbestandteile beziehen, die im Schienenweg eingeschlossen sind.

8. Verfahren nach einem oder mehreren der vorherigen Ansprüche, wobei der Fernserver mit einer Datenbank implementiert ist, die zum organisierten Speichern historischer Daten der georeferenzierten Umgebungsparameter eingerichtet ist, die mit Bezug auf eine vorgegebene Zeitspanne detektiert werden.

9. Verfahren nach Anspruch 8, das den weiteren Schritt des Abarbeitens, mithilfe der speziell dafür vorgesehenen Softwaremittel, von einem oder mehreren Gegenüberstellungsvorgängen zwischen einem oder mehreren aktuellen Parametern und einem oder mehreren entsprechenden historischen Parametern, die in der Datenbank gespeichert sind, zur Identifizierung möglicher Abweichungs- oder Anomaliesituationen umfasst.

## Revendications

1. Procédé de détection automatique et de traitement et de stockage ultérieurs d'un ou de plusieurs paramètres environnementaux géo-référencés se référant à une voie ferrée de référence, comprenant les étapes suivantes :
- acquisition automatique d'un ou de plusieurs paramètres environnementaux géo-référencés se référant à une ou plusieurs conditions environnementales actuelles d'une voie ferrée de référence au moyen de moyens de détection qui sont situés à bord d'un moyen qui est approprié pour le déplacement sur un rail ;
- transmission desdites données et dudit un ou desdits plusieurs paramètres détectés à un serveur, mis en oeuvre avec des moyens de mémoire configurés pour le stockage organisé desdits paramètres géo-référencés ;
- traitement, au moyen de moyens logiciels dédiés qui résident dans ledit serveur distant et selon des instructions prédéfinies, dudit un ou desdits plusieurs paramètres environnementaux géo-référencés, pour générer un ou plusieurs modèles 3D se référant aux conditions environnementales actuelles de la voie ferrée de référence ;
- traitement, au moyen dudit moyen logiciel dédié, d'une confrontation entre ledit un ou lesdits plusieurs modèles 3D et un ou plusieurs modèles de référence correspondants, pour détecter d'éventuelles situations de déviation ou d'anomalie, **caractérisé par le fait que** ledit serveur est distant et que ladite étape de l'acquisition automatique d'un ou de plusieurs paramètres environnementaux géo-référencés se référant à ladite voie ferrée, comprend les étapes de:
- détection d'un ou de plusieurs paramètres se référant à l'état actuel de la végétation qui est présente à l'intérieur et à proximité de la voie ferrée ;
- classification de ladite végétation comme infestante, dangereuse, neutre, utile, et
- sur la base de ladite classification, identification et par conséquent fourniture, de manière régulée et automatique, des meilleures stratégies d'intervention qui sont ensuite transmises aux opérateurs.

2. Procédé selon la revendication 1, ladite étape de traitement, au moyen dudit moyen logiciel dédié, d'une confrontation entre ledit un ou lesdits plusieurs modèles 3D et un ou plusieurs modèles de référence correspondants étant effectuée par confrontation par chevauchement du profil actuel dudit un ou desdits plusieurs modèles et du profil d'un modèle prédéfini correspondant de référence.

3. Procédé selon la revendication 1 et/ou 2, ladite étape d'acquisition automatique dudit un ou desdits plusieurs paramètres environnementaux géo-référencés se référant à des conditions environnementales actuelles correspondantes de la voie ferrée de référence étant mise en oeuvre au moyen de moyens de balayage de type laser.

4. Procédé selon l'une ou plusieurs des revendications précédentes, comprenant les étapes supplémentaires de :
- définition du profil dudit un ou desdits plusieurs modèles 3D se référant aux conditions environnementales actuelles de la voie ferrée de référence au moyen d'une pluralité de points ;
- réalisation, au moyen dudit moyen logiciel dédié, d'une analyse de données de réflectance pour chacun desdits points définissant le profil du modèle 3D soumis à l'examen, afin de détecter des informations se référant aux conditions environnementales de la voie ferrée surveillée.

5. Procédé selon l'une ou plusieurs des revendications précédentes, lesdits moyens de détection automatique étant en outre mis en oeuvre avec des moyens de caméra, comprenant les étapes de :
- acquisition d'une séquence d'images géo-référencées associées à la voie ferrée de référence, à des intervalles de temps prédéterminés ;
- traitement, au moyen dudit moyen logiciel dédié, desdites images géo-référencées acquises, afin de prendre en charge l'individualisation d'éventuelles situations de déviation ou d'anomalie.

6. Procédé selon l'une ou plusieurs des revendications 1 à 5, ladite étape d'acquisition automatique d'un ou de plusieurs paramètres environnementaux géo-référencés se référant à ladite voie ferrée de référence comprenant la détection d'un ou de plusieurs paramètres se référant à l'état actuel du ballast de voie ferrée et des côtés associés.

7. Procédé selon l'une ou plusieurs des revendications 1 à 5, ladite étape d'acquisition automatique d'un ou de plusieurs paramètres environnementaux géo-référencés se référant à ladite voie ferrée de référence comprenant la détection d'un ou de plusieurs paramètres se référant à l'état actuel des composants d'infrastructure compris dans la même voie ferrée.

8. Procédé selon l'une ou plusieurs des revendications précédentes, ledit serveur distant étant mis en œuvre avec une base de données, qui est configurée pour le stockage organisé de données historiques des paramètres environnementaux géo-référencés détectés se référant à une durée prédéfinie.

9. Procédé selon la revendication 8, comprenant l'étape supplémentaire de traitement, au moyen dudit moyen logiciel dédié, d'une ou de plusieurs opérations de confrontation, entre un ou plusieurs paramètres actuels et un ou plusieurs paramètres historiques correspondants, stockés dans ladite base de données, pour l'identification d'éventuelles situations de déviation ou d'anomalie.
